# EUROPEAN PATENT SPECIFICATION

(11) **EP 3 050 749 B1**
(45) Date of publication and mention of the grant of the patent: **24.05.2017**
(21) Application number: 16150758.7
(22) Date of filing: 11.01.2016
(51) Int. Cl.: B60P 3/32, B62D 33/06, B60P 3/39

(54) **DEVICE FOR HANDLING BEDS**
VORRICHTUNG ZUR HANDHABUNG VON BETTEN
DISPOSITIF DE MANIPULATION DE LITS

(30) Priority: 02.02.2015 IT FI20150021
(43) Date of publication of application: 03.08.2016
(73) Proprietor: Nardini, Davide, 50041 Calenzano (FI) (IT)
(72) Inventor: Nardini, Davide, 50041 Calenzano (FI) (IT)
(74) Representative: Mincone, Antimo

(56) References cited:
- US-B2- 8 651 545

## Description

The present invention relates to a device for handling beds, in particular beds for campers, motor homes and similar vehicles.

Structures for handling beds for campers are disclosed, for example, in EP2396267, US8651845 and US5984404. Such structures include, essentially, a frame adapted to form a support base for a mattress, an electric gearmotor acting on a shaft positioned parallel to a side of the frame, and a set of belts which, on one side, are constrained to the shaft and, on the other side, are bound to fixed points of the vehicle cabin where the bed is positioned. The clockwise or counterclockwise rotation of the shaft, controlled by means of the gearmotor, determines the winding of the belts on the same shaft or their unwinding and, thus, the lifting or the lowering of the frame. In this way, the bed can be placed in the lowered use position or in the raised non-use position of to free the space occupied by the structure when the bed is not used. The position, or height, of the bed is generally controlled by an electronic encoder associated with the gearmotor that detects the revolutions of the shaft on whichnthe belts wound/unwound. This type of encoder must be associated with a suitable programmable control unit which must be suitably connected to the electrical system of the vehicle and to the controls provided for the actuation of the gearmotor by the user.

The main purpose of the present invention is to propose a device for moving beds of the type mentioned above that allows to reduce the time, and consequently the cost, of installation and that, at the same time, is more easily applicable to beds variously conformed, i,e. beds having different shapes and sizes.

This result has been achieved, in accordance with the present invention, by providing an apparatus according to claim 1. Other features of the present invention are the subjects of the dependent claims.

Thanks to the present invention, both the production and the installation of the bed are simplified, since the control device is applicable in any position along the outer surface of the shaft for winding / unwinding the belts and, therefore, it is apt to be provided on bed structures variously dimensioned and conformed. Furthermore, a control device in accordance with the present invention is more easily manageable, it is relatively simple from the constructive point of view and is particularly cheap in relation to the advantages it offers.

These and other advantages and features of this invention will be best understood by anyone skilled in the art thanks to the following description and to the attached drawings, provided by way of example but not to be considered in a limitative sense, wherein:
- Fig.1 is a schematic plan view from below of a bed for recreational vehicles in accordance with the present invention;
- Fig.2 is a schematic side view of the bed of Fig.1;
- Figs 3 and 4 are two enlarged details of Fig.2;

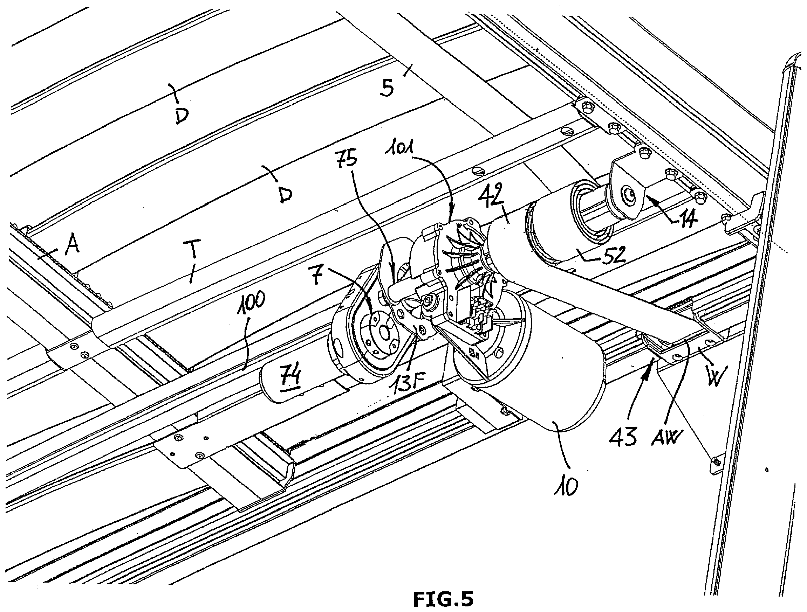

- Fig.5 is a partial bottom perspective view of the bed shown in Fig.1;
- Fig.6 is an exploded perspective view of the encoder-transmission unit according to a possible embodiment;

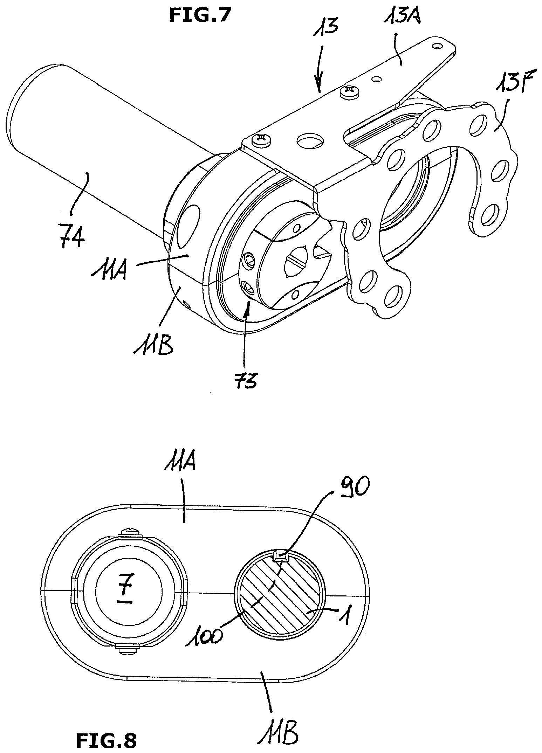

- Fig.7 shows the unit of Fig.6 in the assembled configuration;
- Fig.8 schematically represents the unit of Fig.6 mounted with the wheel (9) of the transmission shaft (1) ;
- Figs. 9 and 10 show two further embodiments of the present invention.

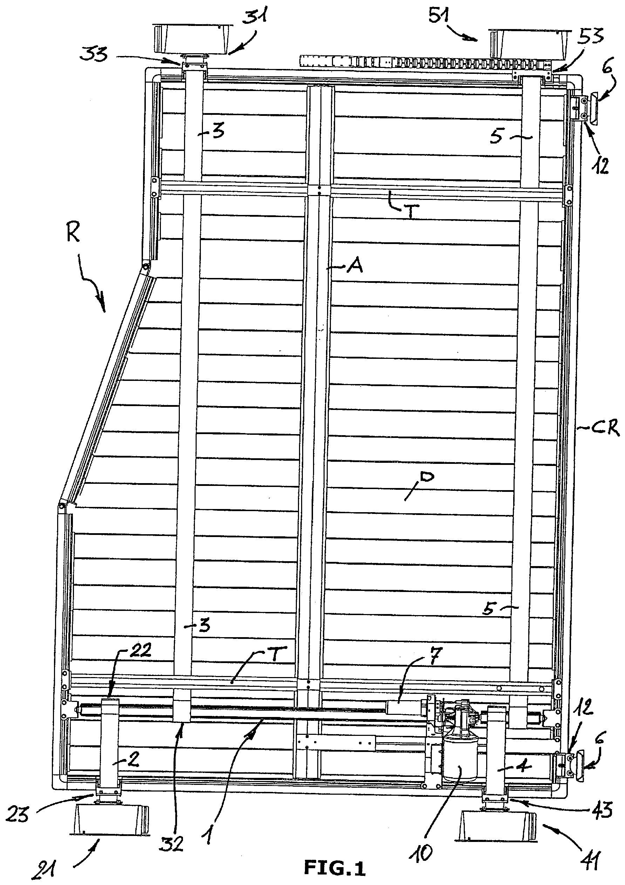

A device in accordance with the present invention can be used, as mentioned above, for raising and lowering a bed, i.e. a frame (R) which forms the base of the bed on which is placed a mattress (not shown in the drawings), inserted in the cabin of a recreational vehicle (not shown in the drawings). In the example shown in Fig.1, the frame (R) is substantially trapezoidal in plan but it is understood that the shape of the frame (R) can also be rectangular or square. In this example, the frame (R) comprises a perimetral structure, preferably made of metal elements, to which are connected the transversal slats (D) on which the mattress rests, an internal lobgitudinal beam (A) and a plurality of cross-members (T).

In accordance with the example shown in the drawings, the mechanism for lowering and lifting of the bed frame (R) comprises a shaft (1) driven by a gearmotor (10), four belts (2, 3, 4, 5), ie two pairs of belts (2, 3; 4, 5), being anchored to said shaft. The gearmotor (10) is electric and is connected to a corresponding actuation switch (not shown in the drawings) controlled by the user. Each of said belts has a first end anchored on the shaft (1) and a second end connected to a corresponding fixed point (21, 31, 41, 51), i.e. a point located at a predetermined height in the cabin of the vehicle.

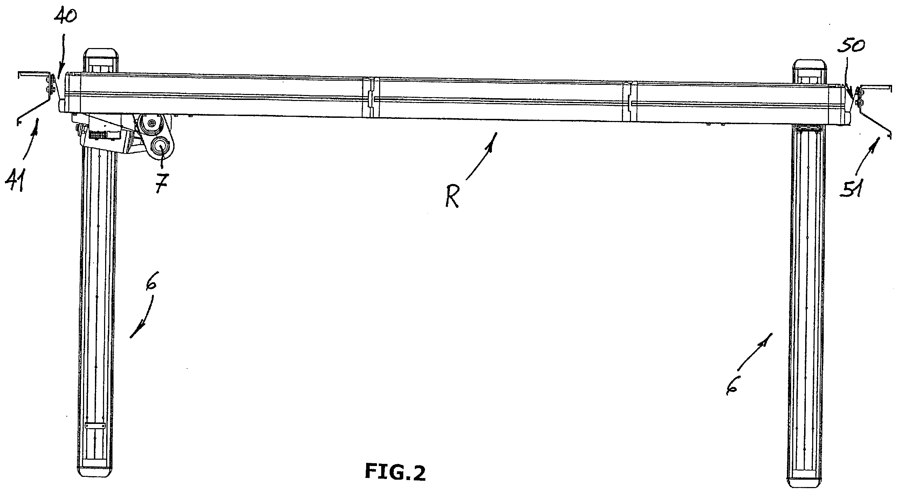

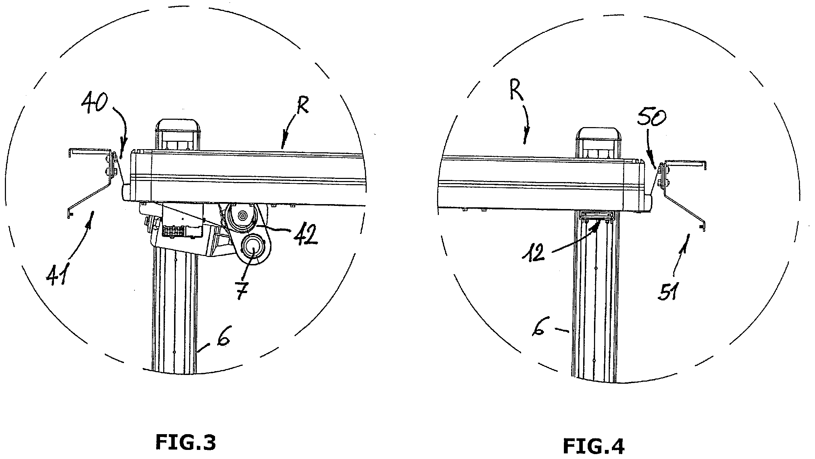

With reference to Figs 2, 3 and 4, the ends of the belts (4) and (5) constrained to the fixed points (41) and (51) of the cabin are indicated by references "40" and "50" respectively. The parts of the same belts (4) and (5) which are wound on the shaft (1) are indicated by the references "42" and "52", while the homologous parts of belts (2) and (3) are marked by references "22" and "32". The ends of the shaft (1) are supported by brackets (14) fixed on the internal side of two opposite sides of the frame (R).

Said fixed points (21, 31, 41, 51) correspond to the vertices of an ideal quadrilateral which extends transversely to the cabin of the vehicle and are made by four identical brackets fixed to the inner walls of the vehicle cabin.

On one side (CR) of the frame (R) are applied two appendices (12), oriented perpendicularly to the same side (CR) and intended to slide in two corresponding vertical guides (6) that are also fixed to the cab of the vehicle. In this way, it is possible to stabilize the movement of the frame (R) in the lowering and lifting phases.

On each of said belts (2, 3, 4, 5) there is mounted an L-shaped bracket (23, 33, 43, 53) with a wing (W) on which the frame (R) is positioned. Each of said brackets (23, 33, 43, 53) has a slot (AW) for the passage of the respective belt (2, 3, 4, 5). In practice, each of said belts (2, 3, 4, 5) can slide in the slot (T) of the respective bracket while it is wound onto the shaft (1), or unwound.

By actuating the gearmotor (10), that is, by rotating the shaft (1) in a clockwise or counterclockwise direction around its longitudinal axis, the winding of the belts (2, 3; 4, 5) on the shaft (1) or their unwinding takes place and, thus, it is provided the lifting or lowering of the brackets (23, 33, 43, 53), i.e. the lifting or lowering of the frame (R) which in this way can be placed in a raised non-use position and respectively in a lowered position of use. In Fig.2 the frame (T) is in the raised non-use position.

Such a lifting/lowering mechanism, as previously mentioned, is known per se.

Advantageously, in accordance with the present invention, the shaft (1) has an associated electromechanical encoder (7) placed externally to the same shaft (1) and externally to the gearmotor (10). The connection between the shaft (1) and the encoder electromechanical (7) is made by means of a suitable transmission which is also external to the gearmotor (10).

The encoder (7) can be of the type, known per se, normally provided inside the hollow shafts of electrically moved blinds. The structure and operation of such an encoder are known. Thyse type of encoder has a rotating input ring (71) destined to be connected with a rotating shaft to be controlled and an electric output (72) intended to be connected with an electric appliance, such as an electric motor, also to be controlled.

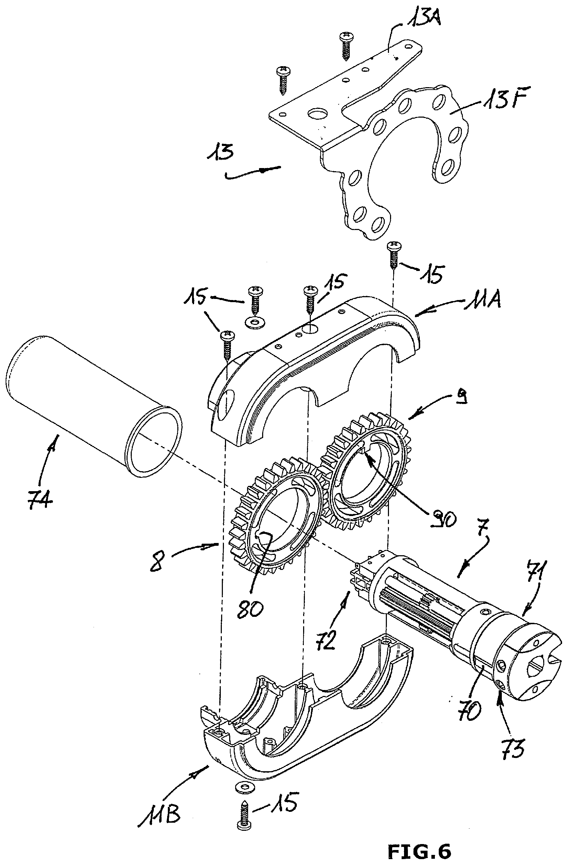

In accordance with the example shown in Fig.6, said transmission comprises two wheels with external toothing (8, 9) which mesh with each other: the first toothed wheel (8) has a groove (80) on an inner ring thereof which engages the tooth (70) of the input rotating ring (71) of the encoder; the second toothed wheel (9) has a tooth (90) on an inner ring thereof which engages a longitudinal groove (100) provided on the outer surface of the shaft (1). Therefore, the rotation of the shaft (1) is transmitted to the second wheel (9) which, by meshing with the first wheel (8), determines the rotation of the latter and, consequently, causes the rotation of the ring (71) whose tooth (70) is engaged in the groove (80) of the first wheel (8). In this way, the rotation of the shaft (1) is transmitted to the encoder (7). By connecting the electric output (72) of the encoder with the electric supply circuit of the gearmotor (10) and setting the stop lifting and lowering positions of the bed by means of the adjusting screws (73) normally provided by the encoder (7), the same encoder controls the stop of the gearmotor (10) when the bed reaches the end positions. The stop bed lifting and lowering positions are the positions that the bed frame is allowed to reach when it is fully raised and fully lowered. Such positions may vary in relation the the cabin dimensions.

As can be seen from the accompanying drawings, the encoder body (7), which is substantially tubular, passes through the first wheel (8) and is inserted in a containing capsule (74). The axis of the first wheel (8), the encoder body (7) and the capsule (74) are oriented parallel to the shaft (1). The second wheel (9) is coaxial and external to the latter. The toothed wheels (8, 9) and the inlet ring (71) of the encoder (7) are protected by a casing formed by two half-shells (11A, 11B) positioned on opposite sides and connected to each other by means of screws (15) so as to be one above and the other below the group formed by the toothed wheels (8, 9) and the encoder (7). On said casing (11A, 11B) there is applied to a bracket (13) with a front flange (13F) by means of which the same casing (11A, 11B), and with it the group formed by the encoder (7) and the transmission (8, 9), can be fixed to another bracket which in turn supports the motor and is fixed to the frame (R) in the desired position, using a tubular appendix (75) projecting from the carrter (101) of the gearmotor (10).

It is understood that the encoder (7) can be spaced as desired from the gear motor (10).

Since the encoder (7) is external to the shaft (1) and, like the gearmotor (10), it can be placed in any position along a direction parallel to the same shaft (1), the control device described above can be mounted on structures of beds variously dimensioned and shaped, thereby resulting very flexible from the practical point of view.

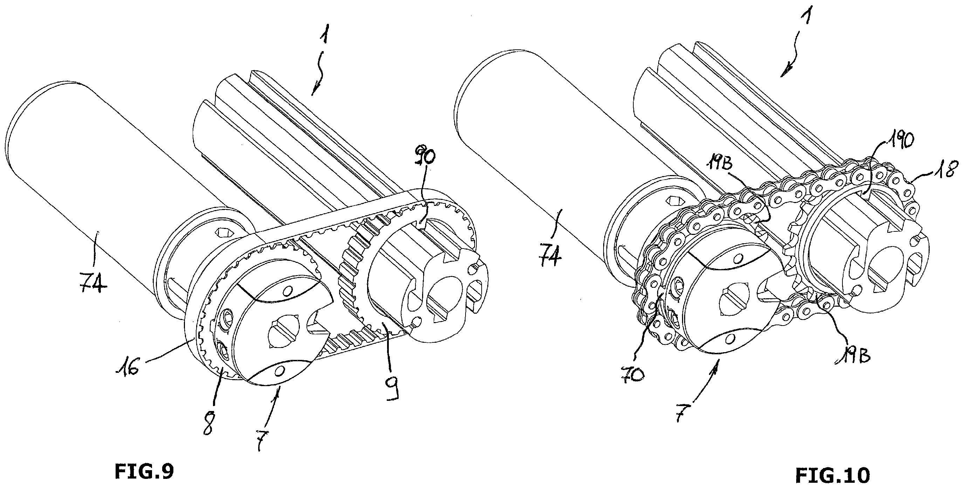

The aforesaid transmission for connecting the encoder to the shaft (1) may also comprise, in place of the second toothed wheel (9), a toothed belt wound on the first toothed wheel (8) and respectively on the shaft (1), although a gear transmission like that exemplified above is preferred. In Fig.9 said toothed belt is denoted by the reference "16" and in this example it is wound on the toothed wheels (8) and (9) which in this case do not mesh directly with each other as in the previous example. Also in this case, the transmission comprising the toothed belt (16) can be protected though the casing (11A, 11B) which is not shown in Fig.9 to better highlight the toothed belt (16). Still alternatively, the transmission connecting the shaft (1) and the encoder (7) can be realized by means of a chain (18) wound on sprockets (19A, 19B) mounted on the shaft (1) and on the encoder (7) as previously described for the wheels (8A) and (8B): the sprocket (19A) has a groove on its inner ring which engages the tooth (70) of the ring input (71) of the encoder ; and the sprocket (19B) has a tooth (190) on its inner ring which engages a longitudinal groove (100) provided on the outer surface of the shaft (1). Also in this case, the transmission made by the chain (18) can be protected through the casing (11A, 11B) which in Fig.10 is not shown to better highlight the chain (18) .

The transmission realized by means of the toothed wheels (8) and (9) meshing with each other, or the toothed belt (16) which connects the not meshing toothed wheels (8) and (9) or the chain (18) that connects the sprockets (19A, 19B) always ensures a mechanical connection without slippage between the shaft (1) and the encoder (7).

From the foregoing description it is evident that a device for handling bed structures installed in vehicles in accordance with the invention comprises a shaft (1) connected to an electric gearmotor (10) by means of which the same shaft is made to rotate clockwise and counterclockwise, on the shaft (1) there are bound more belts (20, 30, 40, 50), or other flexible elements adapted to perform the same function, which, being wound on the shaft (1) or unwound in relation to the direction of rotation of the shaft (1), allow to raise or lower a frame (R) on which a mattress can be placed; the device also comprises an encoder (7) which controls the rotation of the shaft (1); the encoder (7) is positioned externally to the shaft (1), is external to the gearmotor (10) and is connected to the shaft (1) by means of a transmission that is external both to the shaft (1) and the gearmotor (10); said transmission comprises toothed transmission means (8, 9; 19A, 19B) connected to the shaft (1) and respectively to the encoder (7) and connected between them. In one example, the toothed transmission means comprise the toothed wheels (8) and (9) directly meshing between them. In another example, the toothed transmission means comprise the toothed wheels (8) and (9) connected by the belt (16). In yet another example, the toothed transmission means comprise the sprockets (19A) and (19B) connected by the chain (18).

In all the examples described, the transmission comprises toothed members connected to the shaft (1) and respectively to the encoder (7) and connected between them by means of toothings.

In practice the details of execution may vary according to what regards to the individual elements described and illustrated and with their arrangement, without departing from the scope of the protection granted by this patent.

## Claims

1. Device for handling bed frames (R)installed in vehicles, comprising a shaft (1), an electric gearmotor (10), belts (2, 3, 4, 5) and an encoder (7), wherein the shaft (1) is connected to the electric gearmotor (10) through which the shaft is rotated clockwise and counterclockwise, wherein the belts (2, 3, 4, 5) are bound on the shaft (1) such that, by winding on the shaft (1) or unwinding, the belts (2, 3, 4, 5) are adapted to raise or lower a bed frame (R) on which a mattress can be placed, wherein the encoder (7) controls the rotation of said shaft (1), wherein the encoder (7) is positioned externally to the shaft (1), is external to the motorgear (10) and is connected to the shaft (1) by means of a transmission external to the shaft (1) and external to the gearmotor (10), **characterized in that** said transmission comprises toothed transmission means (8, 9; 19A, 19B) connected to the shaft (1) and to the encoder (7) and connected between them.

2. Device according to claim 1 **characterized in that** said encoder (7) is connected to the shaft (1) by means of a gear transmission (8, 9).

3. Device according to claim 2 **characterized in that** said transmission comprises a first toothed wheel (8) and a second toothed wheel (9) meshing with each other externally, the first toothed wheel (8) being constrained to a rotary input component (71) of the encoder (7), the second toothed wheel (9) being coupled to the shaft (1), so that the motion of the shaft (1) is transmitted to the encoder (7) through the said toothed wheels (8, 9).

4. Device according to claim 2 **characterized in that** the first toothed wheel (8) is coaxial to the body of the encoder (7) which is substantially tubular.

5. Device according to claim 2 **characterized in that** the second toothed wheel (9) is coaxial and external to the shaft (1).

6. Device according to claim 2 **characterized in that** said transmission (8,9) is inserted in a casing (11A, 11B).

7. Device according to claims 2 and 6, **characterized in that** said casing (11A, 11B) is crossed by the encoder body (7).

8. Device according to claim 1 **characterized in that** said transmission comprises a toothed belt (16) connecting said toothed transmission means between them.

9. Device according to claim 1 **characterized in that** said transmission comprises a chain (18) connecting said toothed transmission means between them.

## Patentansprüche

1. Vorrichtung zur Handhabung von Bettrahmen (R), die in Fahrzeugen installiert sind, wobei die Vorrichtung eine Welle (1), einen elektrischen Getriebemotor (10), Gurte (2, 3, 4, 5) und einen Kodierer (7) umfasst, wobei die Welle (1) mit dem elektrischen Getriebemotor (10) verbunden ist, durch welchen die Welle im Uhrzeigersinn und entgegen dem Uhrzeigersinn in Drehung versetzt werden kann, wobei die Gurte (2, 3, 4, 5) mit der Welle (1) in Verbindung stehen und dadurch, dass die Gurte (2, 3, 4, 5) auf die Welle (1) auf- oder von dieser abgewickelt werden, in der Lage sind, einen Bettrahmen (R) anzuheben oder abzusenken, auf dem eine Matratze angeordnet werden kann, wobei der Kodierer (7) die Drehung der Welle (1) steuert und wobei der Kodierer (7) außerhalb der Welle (1) und außerhalb des Getriebemotors (10) positioniert und mit der Welle (1) durch eine außerhalb der Welle (1) und außerhalb des Getriebemotors (10) angeordneten Kraftübertragungseinrichtung verbunden ist, **dadurch gekennzeichnet, dass** die Kraftübertragungseinrichtung gezahnte Kraftübertragungsmittel (8, 9; 19A, 19B) umfasst, die mit der Welle (1) und dem Kodierer (7) verbunden und zwischen diesen angeschlossen sind.

2. Vorrichtung nach Anspruch 1, **dadurch gekennzeichnet, dass** der Kodierer (7) mit der Welle (1) vermittels einer Getriebeübertragung (8, 9) verbunden ist.

3. Vorrichtung nach Anspruch 2, **dadurch gekennzeichnet, dass** die Kraftübertragungseinrichtung ein erstes Zahnrad (8) und ein zweites Zahnrad (9) umfasst, die miteinander außenseitig kämmen, wobei das erste Zahnrad (8) mit einer Dreh-Eingangskomponente (71) des Kodierers (7) fest verbunden ist, wobei das zweite Zahnrad (9) mit der Welle (1) so gekoppelt ist, dass die Bewegung der Welle (1) über die Zahnräder (8, 9) auf den Kodierer (7) übertragen wird.

4. Vorrichtung nach Anspruch 2, **dadurch gekennzeichnet, dass** das erste Zahnrad (8) zu dem im Wesentlichen rohrförmigen Körper des Kodierers (7) koaxial angeordnet ist.

5. Vorrichtung nach Anspruch 2, **dadurch gekennzeichnet, dass** das zweite Zahnrad (9) zur Welle (1) extern und koaxial angeordnet ist.

6. Vorrichtung nach Anspruch 2, **dadurch gekennzeichnet, dass** die Übertragungseinrichtung (8, 9) in einem Gehäuse (11A, 11 B) angeordnet ist.

7. Vorrichtung nach den Ansprüchen 2 und 6, **dadurch gekennzeichnet, dass** sich der Kodierer (7) durch das Gehäuse (11A, 11 B) hindurch erstreckt.

8. Vorrichtung nach Anspruch 1, **dadurch gekennzeichnet, dass** die Übertragungseinrichtung einen Zahnriemen (16) umfasst, der die gezahnten Übertragungseinrichtungen miteinander verbindet.

9. Vorrichtung nach Anspruch 1, **dadurch gekennzeichnet, dass** die Übertragungseinrichtung eine Kette (18) umfasst, welche die gezahnten Übertragungseinrichtungen miteinander verbindet.

## Revendications

1. Dispositif pour la manipulation de structures de lits (R) installées dans des véhicules, comprenant un arbre (1), un motoréducteur électrique (10), des courroies (2, 3, 4, 5) et un codeur (7), dans lequel l'arbre (1) est relié au motoréducteur électrique (10) à travers lequel l'arbre est tourné dans le sens horaire et antihoraire, dans lequel les courroies (2, 3, 4, 5) sont montées sur ledit arbre (1) tel que, par l'enroulement sur l'arbre (1) ou le déroulement, les courroies (2, 3, 4, 5) sont adaptés pour élever ou abaisser une structure de lit (R) sur lequelle un matelas peut être placé, dans lequel le codeur (7) contrôles la rotation dudit arbre (1), dans lequel le codeur (7) est positionné à l'extérieur de l'arbre (1), est extérne à le motoréducteur (10), et est relié à l'arbre (1) au moyen d'une transmission externe à l'arbre (1) et extérne au motoréducteur (10), **caractérisé en ce que** ladite transmission comprenant des moyens de transmission dentée (8, 9; 19A, 19B) reliés à l'arbre (1) et au codeur (7) et reliés entre eux.

2. Dispositif selon la revendication 1, **caractérisé en ce que** ledit codeur (7) est relié à l'arbre (1) au moyen d'une transmission d'engrenage (8, 9).

3. Dispositif selon la revendication 2, **caractérisé en ce que** ladite transmission comprend une première roue dentée (8) et une seconde roue dentée (9) engrenant l'une avec l'autre à l'extérieur, la première roue dentée (8) étant contrainte à un composant d'entrée rotatif (71) du codeur (7), la deuxième roue dentée (9) étant couplée à l'arbre (1), de sorte que le mouvement de l'arbre (1) est transmis au codeur (7) à travers lesdites roues dentées (8, 9).

4. Dispositif selon la revendication 2, **caractérisé en ce que** la première roue dentée (8) est coaxiale au corps du codeur (7) qui est substantiallement tubulaire.

5. Dispositif selon la revendication 2, **caractérisé en ce que** la deuxième roue dentée (9) est coaxiale et externe à l'arbre (1).

6. Dispositif selon la revendication 2, **caractérisé en ce que** ladite transmission (8, 9) est insérée dans un boîtier (11A, 11B).

7. Dispositif selon les revendications 2 et 6, **caractérisé en ce que** ledit boîtier (11A, 11B) est traversé par le corps de codeur (7).

8. Dispositif selon la revendication 1, **caractérisé en ce que** ladite transmission comprend une courroie dentée (16) reliant lesdits moyens de transmission dentés entre eux.

9. Dispositif selon la revendication 1, **caractérisé en ce que** ladite transmission comprend une chaîne (18) reliant lesdits moyens de transmission dentés entre eux.
